# EUROPEAN PATENT SPECIFICATION

(11) **EP 1 927 480 B1**
(45) Date of publication and mention of the grant of the patent: **19.06.2013**
(21) Application number: 07020470.6
(22) Date of filing: 19.10.2007
(51) Int. Cl.: B44C 1/14, B44C 1/17, B29C 45/00, B60R 13/00, B60R 13/04, B44C 3/04

(54) **Manufacturing method of a transparent emblem or a similar decorative member**
Herstellungsverfahren eines transparenten Emblems oder ähnlichen Zierelements
Procédé de fabrication d'un emblème transparent ou élément décoratif similaire

(30) Priority: 29.11.2006 IT TO20060845
(43) Date of publication of application: 04.06.2008
(73) Proprietor: Zanini S.p.A., 28040 Paruzzaro (NO) (IT)
(72) Inventor: Zanini, Paolo, 28041 Arona (Novara) (IT); Gallina, Edoardo, 28010 Nebbiuno (Novara) (IT)
(74) Representative: Cian, Paolo

(56) References cited:
- EP-A1- 1 707 988
- DE-A1- 2 927 177
- DE-A1- 4 123 002
- DE-A1- 4 135 872
- DE-C1- 19 512 157
- DE-C2- 3 337 128
- GB-A- 884 468
- JP-A- 01 275 235
- JP-A- 02 038 160
- JP-A- 63 110 048

## Description

The present invention refers in general to a method for manufacturing an emblem or a decorative element which are used for representing symbols or marks, for example to be applied on motor vehicles bodies in order to identify their manufacturer.

Known emblems of such a type, which usually have a flat shape, have the function to represent a symbol which may in general consist of a trade name, a word and/or a graphical image, but also aim to provide a favourable appearance of the symbol they represent, which is able to attract the attention of an observer. These emblems, have in particular a better quality, and are therefore more appreciated, if the image of the symbol they represent provides a good effect of depth and tridimensionality.

Emblems are known, for example of marks of motor vehicle manufacturers, which are made from a metallic base body on whose front surface the contour of the symbol to be represented is formed as a relief. At the various hollow zones of the symbol which are formed in this manner, that can be coloured differently, little glass balls of the relevant colour are arranged, usually in a manual way. The base body together with the little glass balls undergo a heating in a furnace, during which the little balls melt in order to form a layer of transparent and coloured glass, so that the metallic bottom surface of the emblem, with the transparent and coloured glass coating overlapping it, allows to give an effect of appreciable depth to the emblem.

However, the emblems obtained by this known method require the execution of manual steps, so that they turn out to be excessively expensive and therefore little adapted to volume production.

Also emblems of plastic material are known, which are obtained from a manufacturing method which can be executed mechanically, without any need of a manual intervention. In order to made these known emblems, a body of transparent plastic material is initially formed during a molding step, by printing on its back surface the hollow zones which define the shape of the symbol to be visualized. Then, a coloured and opaque layer is applied only on the back bottom surface of the emblem, avoiding the hollow zones which define the symbol, and subsequently the entire back surface of the emblem, therefore including the hollow zones of the symbol, is subjected to a metalization process, by means of vacuum aluminum evaporation. The emblem obtained from this known method comprises therefore a front transparent layer provided with an outer glossy surface, inside of which the symbol to be visualized is formed as a relief, having a metallic appearance, so as to project from the opaque background.

Although this known method has the advantage of being adapted to volume production, the emblems made by it have poor characteristics of depth, and are therefore characterized by a flat appearance, little different from that of a bidimensional image, because the outer glossy surface of the emblem reflects the light incident on it in a preponderant way with respect to the bottom surface from which the decorations project.

Moreover, the aluminum applied on the back face of the emblem is poorly resistant to the atmospheric agents and, when exposed to the outer environment, also if it is protected by specific treatments, it degrades quickly. Then, such known emblems are not usually able to satisfy the currently desired life requirements, in particular by the automotive industry. In any case, the metalization process of the back surface of the emblem is not enough selective, since it does not allow to precisely delimit the contours of the symbol that must be realized as a relief on the bottom of the emblem.

DE-A-4 135 872 discloses a method for manufacturing an emblem, in which a transparent body of plastic material is formed, having a back face comprising a base surface in which hollow impressions are formed. On the base surface of the back face a reflecting metallic layer is applied by a heat-activated adhesive layer, except for the inner surface of the hollow impressions. Then, a coloured filler is applied just only within the hollow impressions.

JP-A-01 275 235 discloses an emblem comprising a transparent body of plastic material, the back face of which has a base surface in which hollow impressions are formed. A coloured or a transparent coating layer is applied only on the inner surface of the hollow impressions. Then, a metallic reflecting layer, a protective film layer and a coloured metallic paint are applied in succession on the whole back face of the transparent body, including therefore the hollow impressions and the base surface of the back face.

The main object of the present invention is to propose a method which allows to overcome the drawbacks of the prior art and which makes possible the industrial manufacturing, suitable for the volume production, of emblems provided with better aesthetic characteristics with respect to those known up to now, which is adapted to determine a sensitive depth effect.

This object is reached by virtue of a method claimed herein.

In particular, the invention starts from the observation of the fact that an optical effect of tridimensional relief is mainly determined from the visual perception by the observer of an increased height of the symbol represented, with respect to the background of the emblem. This perception derives particularly from the fact that the depth of the elements of the symbol of the emblem, in practice the height of the parts of the symbol projecting from the background, is more clearly visible when the surface of the background provided with the decorations in relief reflects the incident light to a greater extent with respect to the front glossy surface of the emblem.

By virtue of the method of the invention, it is therefore possible to obtain emblems reproducing graphical symbols and/or elements with an increased appearance of depth, which is greater than the real thickness of the symbol represented by the emblem.

The invention will turn out to be more apparent from the following detailed description, made with reference to the appended drawings which have been provided as a non-limitative example, in which:

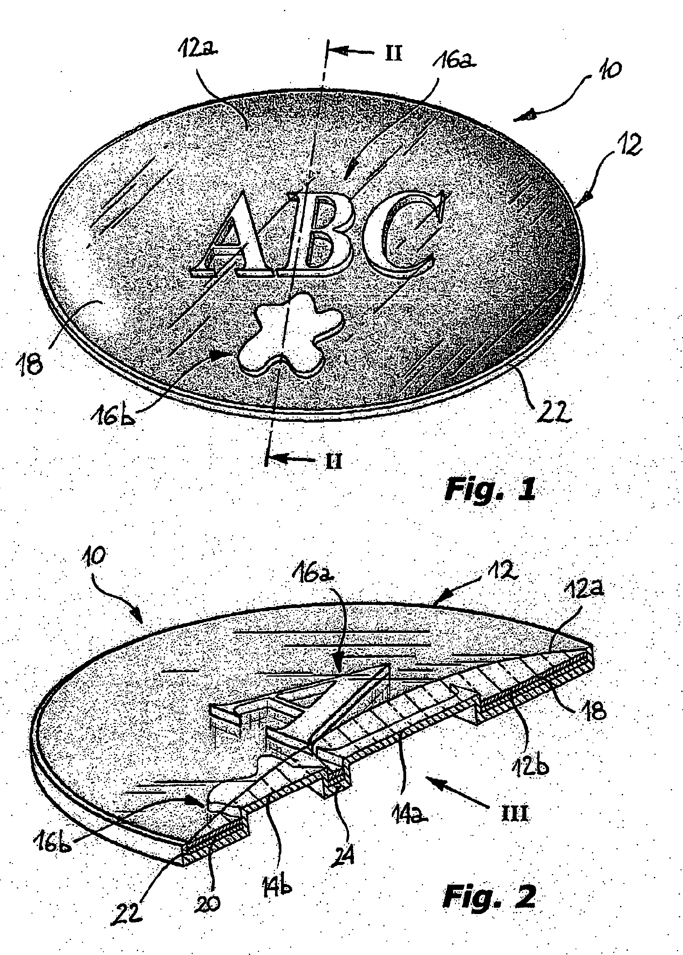

- figure 1 is a schematic perspective view an emblem made by means of the method of the invention, from its front side,
- figure 2 is another perspective view of the emblem, partially sectioned along line II-II of figure 1,

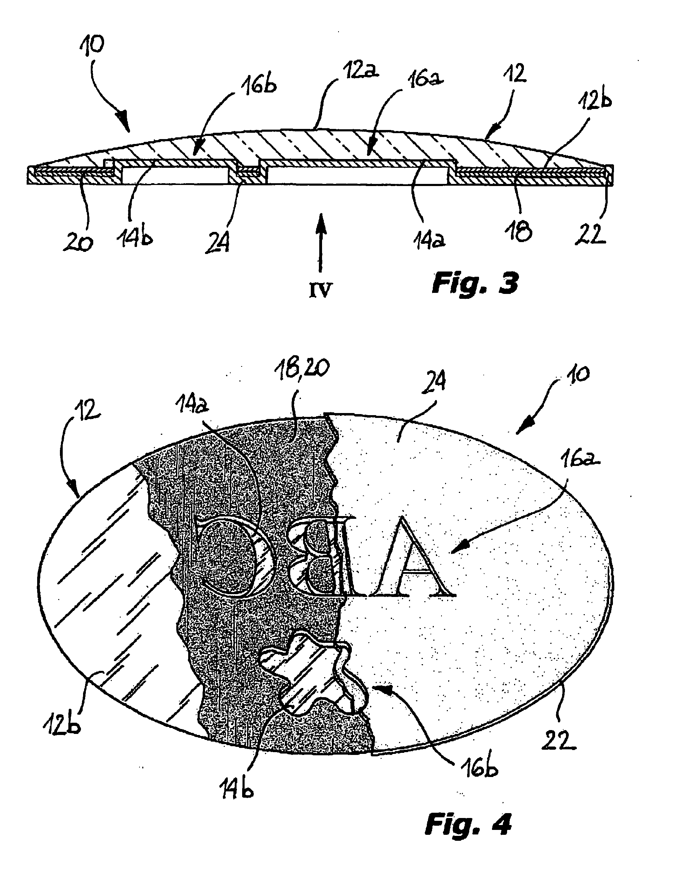

- figure 3 is a sectional side elevational view from arrow III of figure 2, and
- figure 4 is a schematic back perspective view from arrow IV of figure 1, showing the main elements of an emblem made according to the method of the invention.

With reference to the figures, an emblem made according to the method of the invention is indicated in its whole by reference numeral 10. The emblem 10 shown in the figures has a substantially oval shape but, of course, it could be made of any shape.

The emblem 10 comprises essentially a body 12 of transparent plastic material, such as a methyl methyl-met-hacrylate, a polycarbonate, or an acrylic-styrenic material, typically formed through an injection molding process. The body 12 has a front face 12a, smooth and preferably convex, intended to face towards the outside when the emblem 10 is, for example, applied on a wall such as of the body of a motor vehicle.

The back face 12b, opposite to the face 12a, is defined by a base surface in which a series of shaped hollow impressions 14a and 14b are formed when body 12 is molded, in order to define the contours of the symbol to be visualized by the emblem 10. The symbol defined by the impressions 14a and 14b is therefore tridimensional, that is made as a relief with respect to the base surface of the back face 12b, since the impressions 14a and 14b have walls which extend transversely with respect to the base surface of the face 12b.

In the most general case, the impressions 14a and 14b define a trade name or a word 16a consisting of letters, and/or a graphical element 16b, such as a drawing or a logo.

A bottom layer 18 is applied on the base surface of the back face 12b, consisting of a pigmented transparent ink the thickness of which is of some micron, preferably based on acrylic-vinyl and having coloured pigments resistant to the ultraviolet rays action, as the standards of the automotive industry specifications require in order to improve its life. The ink layer 18 can be of a single colour if the background of the emblem 10 must be even, or of a series of coloured zones if a polychrome effect is desired. The layer 18 is preferably applied by tampography or by printing by means of a pad (pad-printing), using a pad or a roller saturated with the pigmented ink, or by a silk-screen process.

A metallic laminar layer 20 having reflecting characteristics, preferably of glossy chromium, is applied on the back surface of the layer 18 in order to make a surface which is able to bring a specular effect. In this manner, the layers 18 and 20 applied on the flat surface of the face 12b, constitute a bottom reflecting coloured surface.

Preferably, the metallic laminar layer 20 is deposited by using the known technology so-called hot-stamping. The hot-stamping process is a dry stamping which allows to transfer coloured pigments or a thin metallic layer from a continuous film support to a member, for example of plastic material, in a permanent way owing to the application of pressure and/or heat. During the execution of the hot-stamping process, which is characterized by an optimal reproducibility and has the advantage to allow to get a high resolution, a silicone rubber pad or roller is used, the shape of which corresponds to that of the shaped surface to be printed.

As an alternative, the pigmented ink layer 18 can be applied directly on a metallic sheet or on a metalized sheet constituting the layer 20, and then both the layers 18 and 20 are transferred on the flat base surface of the face 12b of the body 12, by means of a single step, for example of hot-stamping.

After the application of the layers 18 and 20, a pigmented paint layer 24 having the required colour is spray applied on the whole back face of the emblem 10, in particular on the back surface of the layer 20 and on the inner surfaces of the impressions 14a and 14b, as well as on the outer surface of a peripheral edge 22 of the emblem. In the most general case, the paint of the layer 24 contains metallic pigments in order to give a metallic appearance particularly to the symbols of the emblem 10 defined by the impressions 14a and 14b, as well as to the edge 22.

The whole back surface of the layer 24, including the outer surface of the edge 22, are then conveniently coated, again by a spray application process, with a further paint layer (not shown in the figures), usually acrylic-polyurethane based, having a protective function, in order to improve the resistance of the emblem 10 towards the atmospheric agents.

## Claims

1. Method for manufacturing an emblem or a similar decorative element, particularly adapted to be applied on a motor vehicle, including the step of forming a transparent body (12) of plastic material having a smooth front face (12a) and a back face (12b) that includes a base surface in which hollow impressions (14a, 14b) are formed, said impressions being so shaped as to define at least a tridimensional symbol (16a, 16b) as a relief with respect to said flat base surface,
**characterized in that** it comprises, in succession, the following steps:
- applying a generally coloured transparent layer (18) on the base surface of the back face (12b), except for the inner surface of said hollow impressions (14a, 14b);
- applying a metallic layer (20) with reflecting characteristics on the already applied generally coloured transparent layer (18), that is on the base surface of the back face (12b) except for the inner surface of said hollow impressions (14a, 14b), whereby said generally coloured transparent layer and said metallic layer (18, 20) jointly constitute a reflecting bottom surface for the base surface of the back face (12b),
- applying a pigmented paint layer (24) on the whole back face (12b) of the transparent body (12), in order to coat said metallic layer (20) and also the inner surface of said hollow impressions (14a, 14b).

2. Method according to claim 1, **characterized in that** said body (12) is of methyl methyl-met-hacrylate, of polycarbonate, or of an acrylic-styrenic material, and is formed through an injection molding process.

3. Method according to claim 1 or 2, **characterized in that** the front surface of the body (12) has a convex shape facing towards the outside.

4. Method according to any one of claims 1 to 3, **characterized in that** said impressions (14a, 14b) define a trade name or a word (16a) and/or a graphical element (16b).

5. Method according to any one of claims 1 to 4, **characterized in that** said transparent layer (18) consists of a transparent ink based on acrylic-vinyl, containing coloured pigments.

6. Method according to any one of claims 1 to 5, **characterized in that** said metallic layer (20) includes a glossy chromium sheet and makes a specular effect.

7. Method according to any one of claims 1 to 6, **characterized in that** it comprises the step of directly applying the transparent layer (18) on the base surface of the back face (12b) of the body (12) by means of a tampography or silk-screen process, as well as the step of applying said metallic layer (20) on the back surface of the transparent layer (18) by means of a hot-stamping process.

8. Method according to any one of claims 1 to 6, **characterized in that** it comprises the step of applying the ink layer (18) on a metallic layer (20), and the step of transferring the ink and the metallic layers (18, 20) coupled to each other, on the base surface of the face (12b) by means of a hot-stamping process.

9. Method according to any one of claims 1 to 8, **characterized in that** said pigmented paint layer (24) contains metallic pigments.

10. Method according to any one of claims 1 to 9, **characterized in that** said pigmented paint layer (24) is applied also on the outer surface of a peripheral edge (22) of the emblem (10).

11. Method according to any one of claims 1 to 10, **characterized in that** it includes the step of applying an auxiliary protective paint layer, preferably acrylic-polyurethane based, on the back surface of the pigmented paint layer (24).

## Patentansprüche

1. Verfahren zur Herstellung eines Emblems oder ähnlichen Schmuckelementes, insbesondere zum Anbringen an einem Kraftfahrzeug, umfassend einen Schritt zur Bildung eines transparenten Körpers (12) aus Kunststoff mit einer glatten Vorderseite (12a) und mit einer Rückseite (12b), die eine Basisfläche einschließt, in der Formeinsenkungen (14a, 14b) ausgebildet sind, deren Form wenigstens ein dreidimensionales Symbol (16a, 16b) definiert, das relativ zu der flachen Basisfläche erhaben ist,
**dadurch gekennzeichnet, dass** dieses nacheinander die folgenden Schritte aufweist:
- Aufbringen einer im wesentlichen farbigen, transparenten Schicht (18) auf die Basisfläche der Rückseite (12b) mit Ausnahme der inneren Oberfläche der Formeinsenkungen (14a, 14b),
- Aufbringen einer metallischen Schicht (20) mit reflektierenden Eigenschaften auf die bereits aufgebrachte, im wesentlichen farbige, transparente Schicht (18) und damit auf die Basisfläche der Rückseite (12b) mit Ausnahme der inneren Oberfläche der Formeinsenkungen (14a, 14b), wobei die im wesentlichen farbige, transparente Schicht (18) und die metallische Schicht (20) gemeinsam eine reflektierende Unterseite für die Basisfläche der Rückseite (12b) bilden,
- Aufbringen eines pigmentierten Anstrichs (24) auf die ganze Rückseite (12b) des transparenten Körpers (12), wodurch die metallische Schicht (20) und die innere Oberfläche der Formeinsenkungen (14a, 14b) beschichtet werden.

2. Verfahren nach Anspruch 1, **dadurch gekennzeichnet, dass** der Körper (12) aus Methyl-Methacrylsäureester, Polycarbonat oder einem Acryl-Styrol-Material besteht, das mittels eines Spritzgussverfahrens geformt wird.

3. Verfahren nach Anspruch 1 oder 2, **dadurch gekennzeichnet, dass** die Vorderseite des Körpers (12) eine, nach außen gerichtete konvexe Form hat.

4. Verfahren nach einem der Ansprüche 1 bis 3, **dadurch gekennzeichnet, dass** die Formeinsenkungen (14a, 14b) einen Handelsnamen oder ein Wort (16a) und/oder ein graphisches Element (16b) darstellen.

5. Verfahren nach einem der Ansprüche 1 bis 4, **dadurch gekennzeichnet, dass** die transparente Schicht (18) aus einer transparenten Farbe auf der Basis von Acryl-Vinyl mit Farbpigmenten besteht.

6. Verfahren nach einem der Ansprüche 1 bis 5, **dadurch gekennzeichnet, dass** die metallische Schicht (20) eine glänzende Chromschicht aufweist und eine spiegelnde Wirkung erzeugt.

7. Verfahren nach einem der Ansprüche 1 bis 6, **dadurch gekennzeichnet, dass** dieses den Schritt eines direkten Aufbringens der transparenten Schicht (18) auf die Basisfläche der Rückseite (12b) des Körpers (12) mittels eines tampographischen oder Siebdruck-Verfahrens sowie den Schritt des Aufbringens der metallischen Schicht (20) auf die Rückseite der transparenten Schicht (18) mittels Heißprägens einschließt.

8. Verfahren nach einem der Ansprüche 1 bis 6, **dadurch gekennzeichnet, dass** dieses den Schritt des Aufbringens der Farbschicht auf die metallische Schicht (20) sowie den Schritt des Überführens der Farbe (18) und der damit verbundenen metallischen Schicht (20) auf die Oberfläche der Rückseite (12b) mittels Heißprägens umfasst.

9. Verfahren nach einem der Ansprüche 1 bis 8, **dadurch gekennzeichnet, dass** die pigmentierte Farbschicht (24) Metallpigmente enthält.

10. Verfahren nach einem der Ansprüche 1 bis 9, **dadurch gekennzeichnet, dass** die pigmentierte Farbschicht (24) auch auf die Außenseite einer umlaufenden Kante (22) des Emblems (10) aufgetragen wird.

11. Verfahren nach einem der Ansprüche 1 bis 10, **dadurch gekennzeichnet, dass** dieses den Schritt des Aufbringens eines zusätzlichen Schutzanstrichs auf die Rückseite der pigmentierten Farbschicht (24) einschließt, vorzugsweise auf Acryl-Polyurethan-Basis.

## Revendications

1. Procédé pour la fabrication d'un emblème ou élément décoratif similaire, particulièrement destiné à être appliqué sur un véhicule à moteur, incluant l'étape consistant à former un corps transparent (12) en matière plastique ayant une face avant (12a) lisse et une face arrière (12b) qui inclut une surface de base dans laquelle des empreintes en creux (14a, 14b) sont aménagées, ces empreintes étant conformées de manière à définir au moins un symbole tridimensionnel (16a, 16b) en relief par rapport à ladite surface de base plate, **caractérisé en ce qu'**il comprend, en succession, les étapes suivantes :
- appliquer une couche transparente (18) généralement colorée sur la surface de base de la face arrière (12b), à l'exception de la surface interne desdites empreintes en creux (14a, 14b) ;
- appliquer une couche métallique (20) ayant des caractéristiques réfléchissantes sur ladite couche transparente (18) généralement colorée appliquée au préalable, c'est-à-dire sur la surface de base de la face arrière (12b) à l'exception de la surface interne desdites empreintes en creux (14a, 14b), de sorte que lesdites couche transparente généralement colorée et couche métallique (18, 20) constituent conjointement une surface inférieure réfléchissante pour la surface de base de la face arrière (12b) ;
- appliquer une couche de peinture pigmentée (24) sur l'ensemble de la face arrière (12b) du corps transparent (12), afin de recouvrir ladite couche métallique (20) et également la surface interne desdites empreintes en creux (14a, 14b).

2. Procédé selon la revendication 1, **caractérisé en ce que** ledit corps (12) est fait de méthyle méthyle-met-hacrylate, de polycarbonate, ou d'un matériau acrylique-styrène, et est formé par un processus de moulage par injection.

3. Procédé selon l'une des revendications 1 ou 2, **caractérisé en ce que** la surface avant du corps (12) a une forme convexe tournée vers l'extérieur.

4. Procédé selon l'une quelconque des revendications 1 à 3, **caractérisé en ce que** lesdites empreintes (14a, 14b) définissent un nom commercial ou un mot (16a) et / ou un élément graphique (16b).

5. Procédé selon l'une quelconque des revendications 1 à 4, **caractérisé en ce que** ladite couche transparente (18) est constituée d'une encre transparente à base d'acrylique-vinyle, contenant des pigments colorés.

6. Procédé selon l'une quelconque des revendications 1 à 5, **caractérisé en ce que** ladite couche métallique (20) comprend une feuille de chrome brillant et produit un effet spéculaire.

7. Procédé selon l'une quelconque des revendications 1 à 6, **caractérisé en ce qu'**il comprend l'étape consistant à appliquer directement la couche transparente (18) sur la surface de base de la face arrière (12b) du corps (12) au moyen d'un procédé de tampographie ou de sérigraphie, ainsi que l'étape consistant à appliquer ladite couche métallique (20) sur la surface arrière de la couche transparente (18) au moyen d'un procédé d'estampage à chaud.

8. Procédé selon l'une quelconque des revendications 1 à 6, **caractérisé en ce qu'**il comprend l'étape consistant à appliquer la couche d'encre (18) sur une couche métallique (20), et l'étape consistant à transférer l'encre et les couches métalliques (18, 20) reliées l'une à l'autre, sur la surface de base de la face (12b) au moyen d'un procédé d'estampage à chaud.

9. Procédé selon l'une quelconque des revendications 1 à 8, **caractérisé en ce que** ladite couche de peinture pigmentée (24) contient des pigments métalliques.

10. Procédé selon l'une quelconque des revendications 1 à 9, **caractérisé en ce que** ladite couche de peinture pigmentée (24) est appliquée aussi sur la surface externe d'un bord périphérique (22) de l'emblème (10).

11. Procédé selon l'une quelconque des revendications 1 à 10, **caractérisé en ce qu'**il comprend l'étape consistant à appliquer une couche auxiliaire de peinture de protection, de préférence à base d'acrylique-polyuréthane, sur la surface arrière de la couche de peinture pigmentée (24).
